(19) **Europäisches Patentamt European Patent Office Office européen des brevets**

(11) **EP 1 124 142 B1**

(12) **EUROPÄISCHE PATENTSCHRIFT**

(45) Veröffentlichungstag und Bekanntmachung des Hinweises auf die Patenterteilung:
**18.07.2007 Patentblatt 2007/29**

(51) Int Cl.:
*G01S 13/95* (2006.01)     *G01S 13/34* (2006.01)
*G01S 7/35* (2006.01)     *G01S 7/34* (2006.01)
*G01S 17/32* (2006.01)

(21) Anmeldenummer: **01101052.7**

(22) Anmeldetag: **18.01.2001**

(54) **Radarsystem zur Bestimmung der optischen Sichtweite**

Radar system for determining optical visibility

Système radar pour déterminer la visibilité optique

(84) Benannte Vertragsstaaten:
**DE FR GB IT**

(30) Priorität: **08.02.2000 DE 10005421**

(43) Veröffentlichungstag der Anmeldung:
**16.08.2001 Patentblatt 2001/33**

(73) Patentinhaber: **ROBERT BOSCH GMBH**
**70442 Stuttgart (DE)**

(72) Erfinder: **Hahlweg, Cornelius**
**31139 Hildesheim (DE)**

(56) Entgegenhaltungen:
EP-A- 0 957 372      DE-A- 3 237 137
DE-A- 19 530 065      DE-A- 19 632 889
DE-A- 19 652 994      JP-A- 7 151 851

• **PATENT ABSTRACTS OF JAPAN vol. 1996, no. 10, 31. Oktober 1996 (1996-10-31) & JP 08 160122 A (MITSUBISHI ELECTRIC CORP), 21. Juni 1996 (1996-06-21)**
• **PATENT ABSTRACTS OF JAPAN vol. 1995, no. 06, 31. Juli 1995 (1995-07-31) & JP 07 055925 A (DAIKIN IND LTD), 3. März 1995 (1995-03-03)**

## Beschreibung

Stand der Technik

Die Erfindung geht aus von einem Radarsystem nach der Gattung des Hauptanspruchs. Es ist schon ein solches Radarsystem aus der DE 195 30 065 A1 bekannt, bei dem jedoch die Entfernungsmessung auf die Messung von Entfernungen zu festen Körpern beschränkt ist. Ein ähnliches Radarsystem zeigt die DE 1965Z 994A1.

Vorteile der Erfindung

Das erfindungsgemäße Radarsystem mit den kennzeichnenden Merkmalen des Hauptanspruchs hat demgegenüber den Vorteil, Entfernungsprofile zu diffusen Objekten, insbesondere Nebelbänken, erstellen zu können. So können beispielsweise in einem Kraftfahrzeug unabhängig vom Fahrer quantitative Aussagen über die Sichtweite getroffen werden. Dabei ist in vorteilhafter Weise diese Funktionalität durch einfache zusätzliche technische Vorkehrungen in einem Gerät integrierbar, das bereits zur Abstandssensorik eingesetzt wird, beispielsweise beim Einparken oder bei Systemen zur automatischen Fahrzeugsteuerung Vorteilhaft ist ferner die einfache Ausführbarkeit der digital realisierbaren Signalverarbeitung infolge der auszuwertenden relativ niederfrequenten Differenzfrequenzsignale, für die preiswerte digitale Signalprozessoren zur Verfügung stehen. niederfrequenten Differenzfrequenzsignale, für die preiswerte digitale Signalprozessoren zur Verfügung stehen. Besonders vorteilhaft ist das Vorsehen automatisch wirkender Kompensationsmittel, die eine realistische Abbildung diffuser Objekte, insbesondere von Nebelbänken, erlauben. Insbesondere kann der Fahrer die realistische Ausdehnung und die reale räumliche Dichteverteilung solcher Bereiche erfassen und damit die Verkehrssituation/Sichtbehinderung realistisch einschätzen.

Durch die in den abhängigen Ansprüchen aufgeführten Maßnahmen sind vorteilhafte Weiterbildungen und Verbesserungen des im Hauptanspruch angegebenen Radarsystems möglich.

Wird als Sendesignal in seiner Intensität frequenzmoduliertes Licht verwendet, so wird durch die Art des Messens selbst eine reale Abbildung von Bereichen möglicher Sichtbehinderung gewährleistet, da das Sendesignal von gleicher physikalischer Natur ist wie die Lichtstrahlen, die vom menschlichen Auge erfasst werden und die optische Abbildung im Auge bewerkstelligen. Darüber hinaus ist bei der Verwendung von Licht als Informationsträger im Gegensatz zu Messungen im Radiofrequenzbereich keine Notwendigkeit gegeben, auf spektrale Reinheit beziehungsweise auf eine Bandbegrenzung zu achten, so daß die Frequenzmodulation unter Inkaufnahme von Oberschwingungen auch in Rechteckform erfolgen kann, ohne das Meßergebnis zu beeinträchtigen. Bei Systemen im Radiofrequenzbereich ist hingegen das strikte Einhalten der zugewiesenen Frequenzbänder (meist zudem sehr schmalbandig, vgl. Industrial Scientific Medical - Bänder) notwendig (Stichworte Funkdienste, elektromagnetische Verträglichkeit etc.); daher kann ein verwendetes Radarsignal im Radiofrequenzbereich nicht einfach eine Rechteckfolge sein, denn die dabei gesendeten Oberwellen würden eine "Verseuchung" weitab des zugewiesenen Bandes herbeiführen. Darüber hinaus werden für das Verfahren der Sichtweitenbestimmung Laserdiodentreiber hoher Leistung einsetzbar, die für die optische Kommunikation angeboten werden und für pulsförmige Modulation ausgelegt sind.

Ferner wird in vorteilhafter Weise das Sendesignal divergent ausgestrahlt, um eine gute Mittelung über die Dichte etwaiger vorhandener Nebelschichten zu erhalten.

Weitere Vorteile ergeben sich durch die weiteren in den abhängigen Ansprüchen und in der Beschreibung genannten Merkmale.

Zeichnung

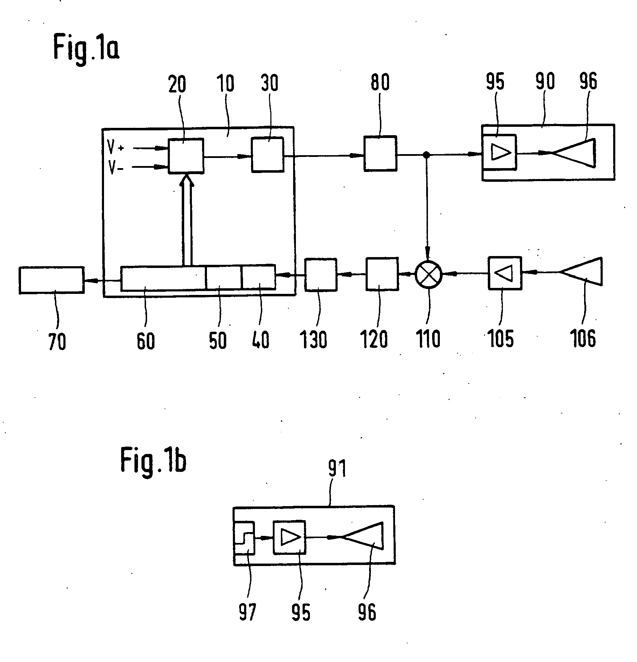

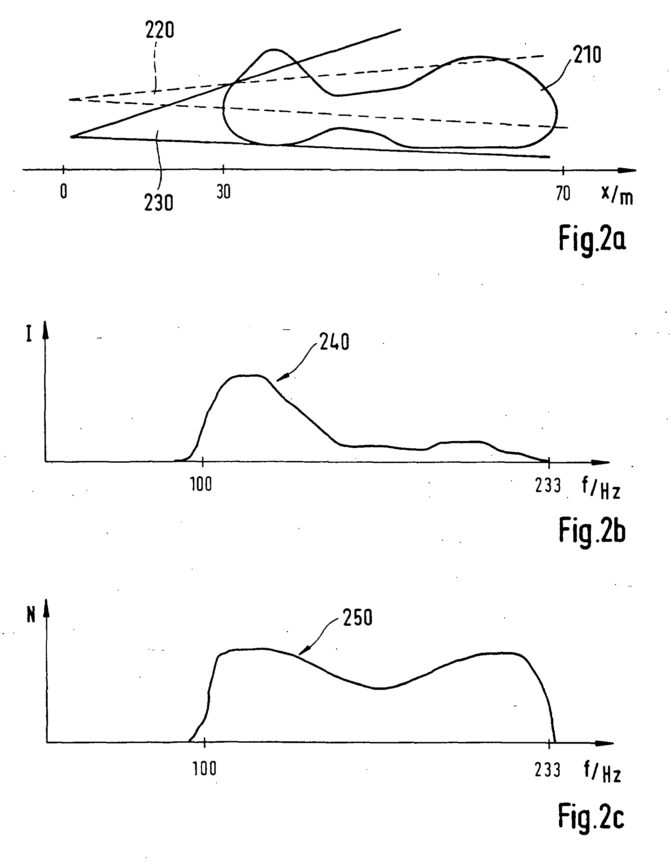

Ausführungsbeispiele der Erfindung sind in der Zeichnung dargestellt und in der nachfolgenden Beschreibung näher erläutert. Es zeigen Figur 1a ein erstes Ausführungsbeispiel, Figur 1b ein Detail eines zweiten Ausführungsbeispiels, Figur 2a eine Nebelbank, Figur 2b und c der Nebelbank entsprechende Entfernungsprofile.

Beschreibung der Ausführungsbeispiele

Figur 1a zeigt ein Radarsystem mit einer Steuereinheit 10. Die Steuereinheit 10 weist einen Analogmultiplexer 20 auf, der mit einer positiven Gleichspannung V+ und einer negativen Gleichspannung V- versorgt wird. Der Multiplexer ist mit einem Integrator 30 verbunden. Die Steuereinheit 10 weist ferner einen digitalen Signalprozessor (DSP) 60 auf, der den Multiplexer 20 ansteuert. Der Signalprozessor 60 enthält einen schnellen Fourierwandler 50(engl. "Fast Fourier Transformer", kurz "FFT") und einen Analog-Digital-Wandler 40. Der DSP 60 ist mit einer Anzeigeinheit 70 verbunden. Der Integrator 30 steuert einen frequenzmodulierbaren Oszillator (VCO) 80 an, der wiederum eine Laserdiode 95 mit einer Steuerspannung bedient. Die Laserdiode 95 ist Teil der Sendeeinheit 90, die ferner ein Abstrahlelement 96 in Form einer Streulinse enthält. Desweiteren besitzt das Radarsystem ein Empfangselement 106 (Linse) zum Sammeln optischer Strahlung. Hinter dem Empfangselement ist eine Photodiode 105 angeordnet. Der Ausgang der Photodiode ist mit einem Mischer 110 verbunden, der das Photodiodensignal mit dem Signal des Oszillators 80 mischt. Das Mischsignal durchläuft einen Tiefpaßfilter 120 und nachfolgend einen Kompensator 130. Der Kompensator wiederum ist mit dem Eingang des Analog-Digital-Wandlers 40 des DSP 60 verbunden.

Der DSP 60 steuert den Analogmultiplexer 20 an zur Erzeugung eines Rechtecksignals, das zwischen den Spannungswerten V+ und V- oszilliert. Der Integrator 30 erstellt aus diesem Rechtecksignal ein Dreiecksignal, das zur Ansteuerung des Oszillators 80 verwendet wird. Der Oszillator 80 produziert eine mit dem Dreiecksignal modulierte hochfrequente Schwingung im Gigahertzbereich. Die Laserdiode wird mit dieser hochfrequenten Schwingung angesteuert und strahlt somit intensitätsmoduliertes Licht aus, wobei die Frequenz der Modulation linear entsprechend dem Dreiecksignal variiert. Abschnittsweise erfolgt somit eine Frequenzmodulation der Lichtintensität entsprechend einer Rampe (d.h. lineares Anwachsen beziehungsweise Absinken der Modulationsfrequenz). Von festen oder diffusen Objekten rückgestreutes Licht wird vom Empfangselement 106 gesammelt und von der Photodiode 105 in ein elektrisches Signal umgewandelt. Der Mischer 110 erzeugt Summen- und Differenzfrequenzsignale. Der Tiefpaßfilter 120 ist so bemessen, daß er nur interessierende Differenzfrequenzanteile des Mischsignals durchläßt. Dies ist beispielsweise bei einer Grenzfrequenz des Filters von 500 MHz gegeben, wenn der maximale Frequenzhub des Oszillators 80 in dieser Größenordnung liegt. Der Kompensator 130 ist durch die als Differenzierglied vierter Ordnung wirkende Flanke eines Hochpaßfilters beziehungsweise Bandpaßfilters gegeben. Dieser Filter bewirkt eine Intensitätskorrektur, indem er Anteile höherer Differenzfrequenzen besser durchläßt. Dadurch wird die Intensitätsabnahme der optischen Strahlung bei großen Entfernungen des streuenden Objekts kompensiert. Das Differenzierglied ist hierbei von vierter Ordnung, da für Objekte im Fernfeld des Senders die empfangene Intensität sowohl durch den Laufweg des Sendesignals als auch durch den Laufweg des Streusignals gedämpft ist, so daß zweimal die umgekehrt quadratische Proportionalität der Intensität zum Abstand zu berücksichtigen ist und das vom Tiefpaßfilter durchgelassene Differenzfrequenzsignal jedes Streuobjekts eine Leistung aufweist, die umgekehrt proportional zur vierten Potenz der Differenzfrequenz ist. Das Differenzierglied vierter Ordnung 130 kompensiert genau dies. Der Analog-Digital-Wandler 40 digitalisiert das Mischsignal der erhaltenen und in ihrer Intensität korrigierten Differenzfrequenzanteile, der FFT 50 liefert eine vom DSP verwertbare Spektralanalyse des Mischsignals. Der Zusammenhang zwischen spektraler Intensität und Differenzfrequenz ist dabei ein direktes Abbild beispielsweise der räumlichen Dichteverteilung einer das rückstreuende Objekt darstellenden Nebelbank. Der DSP leitet die Spektralanalyse entweder direkt weiter an die Anzeigeinheit, so daß der Fahrzeugführer erkennt, in welcher Entfernung sich eine Nebelbank befindet und wie weit in Fahrtrichtung sich diese erstreckt. Alternativ kann vorgesehen sein, bei erkennbar kurzer Sichtweite (beispielsweise bei Unterschreitung eines bestimmten Abstands zur Nebelbank) den Fahrer über die Anzeigeeinheit oder über separate Lämpchen oder Warntöne entsprechend zu warnen beziehungsweise automatisch die Einschaltung der Nebelscheinwerfer zu veranlassen.

Wie aus der DE 196 32 889 A1 hierbei bekannt ist, entspricht eine Differenzfrequenz fdiff einer bestimmten Entfernung L, in der sich das streuende Objekt (entweder ein fester Körper oder ein partikelhaltiges Luftvolumen, beispielsweise ein Volumenelement einer Nebelbank) befindet. Dabei ist L durch

$$\texttt{L = fdiff x c / (2 x df/dt)}$$

gegeben, wobei c die Lichtgeschwindigkeit und df/dt der konstante Anstieg bzw. Abfall der Modulationsfrequenz in den durch das Dreiecksignal induzierten Frequenzrampen darstellt. Wählt man beispielsweise einen Frequenzhub von 500 MHz entsprechend dem maximalen Frequenzhub des VCO und setzt man hierfür eine Meßzeit von 1 Sekunde an (das entspricht dann einer Frequenz des Dreiecksignals von 0,5 Hz), so beträgt df/dt = 500 MHz/1s. Bedingt durch die Meßzeit von 1 Sekunde ergibt sich eine Frequenzauflösung des FFT von 1 Hz. Besitzt der FFT zur Analyse des Mischsignals 512 Stützstellen, so beträgt die höchste auflösbare Differenzfrequenz 256 Hz. Aufgrund des obengenannten Zusammenhangs zwischen L und fdiff entspricht dies einer Entfernung von 76,8 m, und 1 Hz entspricht 30 cm. Somit können (diffuse) Objekte in diesem Beispiel bis in einer Entfernung von 76,8 Metern mit einer Ortsauflösung von 30 cm erkannt werden. Die Meßzeiten können bei gegebenem Frequenzhub im Rahmen der Steuerbarkeit (Eingangszeitkonstante des VCO) verkürzt werden, um den unerwünschten mittelnden Einfluß der Fahrbewegung zu verringern. Entsprechend höherfrequent werden die Differenzfrequenzanteile des durch den Mischer 110 erzeugten Signalgemischs.

Figur 1b zeigt eine alternative Sendeeinheit 91, die anstelle der Sendeeinheit 90 verwendet werden kann. Die Sendeeinheit 91 umfaßt einen Schwellwertschalter 97, dessen Ausgangssignal die Laserdiode 95 ansteuert, die in bereits beschriebener Weise ihr Licht über das Abstrahlelement 96 abstrahlt.

Der Schwellwertschalter 97 wandelt die sinusförmigen Schwingungen des Oszillators 80 in ein Rechtecksignal um, so daß für die optische Kommunikation erhältliche Laserdioden hoher Leistung als Laserdiode 95 eingesetzt werden können, die für eine pulsförmige Modulation ausgelegt sind. Das Rechtecksignal enthält als Grundwelle immer noch den ursprünglichen Sinus. Das Mischen im Multiplizierer erfolgt weiterhin mit dem Sinussignal. Die Oberwellen der Rechteckschwingung bleiben ohne Einfluß auf das auszuwertende Signalgemisch, solange die Grenzfrequenz des Tiefpaßfilters geeignet gewählt wird. Die Anordnung aus Mischer und Tiefpaß stellt im Prinzip einen Korrelator dar (Multiplikation zweier Signale und Aufintegration des Produktes), bei dem dank Kurzzeitintegration (Tiefpaß) ein zeitlich variables Korrelat gewonnen wird, d.h. es wird eigentlich ein "langsam" veränderlicher Gleichanteil ausgewertet. Da die Oberwellen des Rechtecks orthogonal zur Grundwelle sind, funktioniert das System auch wie beschrieben, nämlich mit einem Rechteck und dem Sinus der Grundwelle. Die Grenzfrequenz des Tiefpasses muß hierbei unterhalb der niedrigsten verwendeten Momentanfrequenz des VCO liegen. Diese Ausführungsform nutzt die Tatsache aus, daß bei Verwendung von Licht als Träger nicht auf die spektrale Reinheit bzw. Bandbegrenzung geachtet werden muß, da für moduliertes Licht derzeit noch keine Bestimmungen bzgl. der zur Modulation verwendbaren Frequenzen vorliegen. Die ist z.Zt. auch nicht nötig, da Licht für Kommunikationszwecke ohnehin nur geschlossen, vornehmlich in Glasfasern, transportiert wird.

Figur 2a zeigt in schematischer Darstellung eine Nebelbank 210, die sich in einem Entfernungsbereich von 30 bis 70 Metern vor einem Fahrzeug befindet, dessen x-Koordinate im Ursprung liegt. Der vom Abstrahlelement 90 beziehungsweise 91 bestrahlte Bereich 220 ist mit gestrichelten Linien markiert. Der Empfangsbereich des Empfangselements 106 ist mit durchgezogenen Linien und dem Bezugszeichen 230 markiert.

Das Radarsystem liefert in der Anzeigeeinheit 70 beispielsweise ausgehend von der in Figur 2a dargestellten Objektlage die in Figur 2b dargestellte erste Kurve 240. Sie stellt das unkompensierte (d.h. ohne Verwendung des Kompensators 130 erhaltene) Fourierspektrum I des Differenzfrequenzsignalgemischs dar, wobei die Differenzfrequenzen entsprechend der räumlichen Ausdehnung der Nebelbank in x-Richtung einen Bereich zwischen 100 und 233 Hz erfassen. Wird hingegen das Radarsystem mit dem Kompensator 130 ausgestattet, so wird das normierte Fourierspektrum N (zweite Kurve 250) angezeigt, das ein Abbild der räumlichen relativen Verteilung der Nebeldichte darstellt. Zur Darstellung der absoluten Nebeldichte können Vergleichswerte abgespeichert sein, die aus Vergleichsmessungen auf einer Testnebelstrecke variierbarer Dichte (Teilchen pro Kubikmeter) im Durchlicht ermittelt wurden und mit denen die Anzeige geeicht wird. Für den Fall, daß sich einzelne "feste" bzw. größere ausgedehnte Objekte im untersuchten Gebiet befinden, wird das detektierte Spektrum diskrete "Stöße" oder ausgeprägte Peaks enthalten.

Diese können mit einer geeigneten Filtermaske (hier nicht weiter beschrieben) erkannt und ausgeblendet werden.

## Patentansprüche

1. Radarsystem mit Mitteln zur Erzeugung eines frequenzmodulierten Sendesignals, insbesondere FMCW-Radarsystem für Kfz-Anwendungen, mit Mitteln zum Empfang von dem Objekt reflektierter Signale, wobei das Sendesignal leistungsmässig mit zeitabschnittsweise linearer Frequenzvariation über einen frequenzmodulierten Oszillator (80) frequenzmoduliert ist und Multiplikationsmittel (110) vorgesehen sind zur Multiplikation des Sendesignals mit den reflektierten Signalen, so daß nach Tiefpassfilterung (120) Differenzfrequenzsignale weiterverarbeitet werden, wobei mittels eines Frequenzanalysators (50), insbesondere eines schnellen Fourier-Wandlers (engl. "Fast Fourier Transformer") aus den Differenzfrequenzsignalen ein einem Entfernungsprofil entsprechendes Frequenzspektrum errechnet wird und wobei dem Tiefpassfilter (120) vor dem Frequenzanalysator(50) Kompensationsmittel (130) nachgeschaltet sind zur automatischen Kompensation der an sich von der Entfernung der reflektierenden Objekte abhängigen Signalstärke der reflektierten Signale, **dadurch gekennzeichnet, daß** das Sendesignal ein Lichtsignal einer Laserdiode oder einer Hochleistungslichtdiode (95) ist, daß das Mittel zur Erzeugung des frequenzmodulierten Sendesignals eine Sendeeinheit (91) umfaßt, die einen Schwellwertschalter (97) umfaßt, dessen Ausgangssignal die Laserdiode oder die Hochleistungslichtdiode(95) ansteuert, und daß der Schwellwertschalter (97) die Schwingungen des Oszillators (80) in ein Rechtecksignal umwandelt, damit das Sendesignal rechteckförmig moduliert wird.

2. Radarsystem nach Anspruch 1, **dadurch gekennzeichnet, daß** die Kompensationsmittel (130), ein Differenzierglied vierter Ordnung enthalten.

3. Radarsystem nach Anspruch 2, **dadurch gekennzeichnet, daß** das Differenzierglied durch eine entsprechende Flanke eines Hochpaßfilters und/oder Bandpaßfilters gebildet ist.

4. Radarsystem nach-einem der vorhergehenden Ansprüche, **dadurch gekennzeichnet, daß** das Sendesignal divergent ausstrahlbar ist.

## Claims

1. Radar system having means for producing a frequency-modulated transmission signal, in particular FMCW radar system for applications in motor vehicles, having means for receiving signals reflected by the object, wherein the transmission signal is frequency-modulated in terms of power with linear frequency variation at intervals via a frequency-modulated oscillator (80) and multiplication means (110) are provided for multiplying the transmission signal by the reflected signals, so that, after low-pass filtering (120), difference frequency signals are processed further, wherein a frequency spectrum corresponding to a range profile is calculated from the difference frequency signals by means of a frequency analyser (50), in particular of a fast Fourier transformer, and wherein compensation means (130) are connected downstream of the low-pass filter (120), upstream of the frequency analyser (50), for automatic compensation of the signal strength of the reflected signals, which signal strength is a function of the range of the reflecting objects per se, **characterized in that** the transmission signal is an optical signal of a laser diode or of a high-power light-emitting diode (95), **in that** the means for producing the frequency-modulated transmission signal comprises a transmitting unit (91) comprising a threshold switch (97) whose output signal drives the laser diode or the high-power light-emitting diode (95), and **in that** the threshold switch (97) converts the oscillations of the oscillator (80) into a rectangular signal, so that the transmission signal is modulated with a rectangular wave form.

2. Radar system according to Claim 1, **characterized in that** the compensation means (130) comprise a fourth order differentiating element.

3. Radar system according to Claim 2, **characterized in that** the differentiating element is formed by a corresponding flank of a high-pass filter and/or bandpass filter.

4. Radar system according to one of the preceding claims, **characterized in that** the transmission signal can be emitted in a divergent manner.

**Revendications**

1. Système radar comportant des moyens pour générer un signal d'émission modulé en fréquence, en particulier un système radar FMCW pour des applications automobiles, des moyens de réception des signaux réfléchis par l'objet, le signal d'émission étant modulé en fréquence en fonction de la puissance par un oscillateur (80) à modulation de fréquence avec périodiquement une variation de fréquence linéaire, et des moyens de multiplication (110) pour multiplier le signal d'émission par les signaux réfléchis pour traiter les signaux de fréquence de différence après un filtrage passe-bas (120), en calculant un spectre de fréquence correspondant à un profil de distance à partir des signaux de fréquence de différence à l'aide d'un analyseur de fréquence (50), en particulier d'un transformateur de Fourier rapide (en anglais, « Fast Fourier Transformer »), et des moyens de compensation (130) branchés en aval du filtre passe-bas (120) devant l'analyseur de fréquence (50) pour compenser automatiquement la puissance du signal des signaux réfléchis qui dépendent en réalité de la distance des objets réfléchissants,
**caractérisé en ce que**
le signal d'émission est un signal lumineux d'une diode laser ou d'une diode lumineuse à grande puissance (95), le moyen destiné à produire le signal d'émission modulé en fréquence comprend une unité d'émission (91) elle-même comprenant un commutateur de valeur de seuil (97) dont le signal de sortie commande la diode laser ou la diode lumineuse à grande puissance (95), et le commutateur de valeur de seuil (97) convertit les vibrations de l'oscillateur (80) en signal rectangulaire, afin que le signal d'émission soit modulé en forme de rectangle.

2. Système radar selon la revendication 1,
**caractérisé en ce que**
les moyens de compensation (130) contiennent un élément de différenciation de quatrième ordre.

3. Système radar selon la revendication 2,
**caractérisé en ce que**
l'élément de différenciation est formé par un flanc correspondant d'un filtre passe-haut et/ ou d'un filtre passe-bande.

4. Système radar selon l'une des revendications précédentes,
**caractérisé en ce que**
le signal d'émission peut être émis de façon divergente.

Fig.1a

Fig.1b

**Fig.2a**

**Fig.2b**

**Fig.2c**

**EP 1 124 142 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19530065 A1
- DE 1965Z994 A1
- DE 19632889 A1